# EUROPEAN PATENT APPLICATION

(11) **EP 3 878 262 A1**
(43) Date of publication of application: **15.09.2021**
(21) Application number: 21160896.3
(22) Date of filing: 05.03.2021
(51) Int. Cl.: A01D 34/00, A01D 75/30, A01D 34/54, A01D 34/74

(54) **AGRICULTURAL APPARATUS**

(30) Priority: 11.03.2020 GB 202003486
(71) Applicant: AGCO International GmbH, 8212 Neuhausen am Rheinfall (CH)
(72) Inventor: KINAST, Ronnie, 90537 Feucht (DE); FILLEP, Johannes, 90537 Feucht (DE)
(74) Representative: AGCO Intellectual Property Department

(57) **Abstract**

The present invention relates to an agricultural apparatus (2) comprising an agricultural vehicle (4) together with a front work unit (6) and two lateral work units (8, 10) located behind and to the sides of the front work unit (6). The front work unit has a connection (12) to a front of the agricultural vehicle and the lateral work units share a connection (14) to a rear of the agricultural vehicle. Each of the work units deposits a cut crop as a swath (20). One or more sensors (28) determine a height of one or more of the deposited swaths. A control unit (32) is provided to control a height of the connections above a ground surface such that if the height of one or more of the deposited swaths (20) is determined to exceed a predetermined value, the control unit adjusts the height of the rear connection correspondingly.

## Description

### FIELD OF THE INVENTION

The present invention relates to an agricultural apparatus comprising an agricultural vehicle and a number of work units suitable for generating swathes of cut crop, and in particular to a mowing apparatus for cutting a standing crop such as hay.

### BACKGROUND

It is known to provide a mower combination in which a first mower unit is located ahead of an agricultural vehicle such as a tractor with two further mower units trailing the agricultural vehicle. The rear mower units may be provided with conveyors for depositing cut crop into a swath or swathes behind the agricultural vehicle. When turning the mower units are raised from a working position to a raised headland position. The intent is that the mower units are raised above the swath or swathes such that the mower units do not disturb the cut crop as the mower units are moved over the swath or swathes. However, in certain case, due to the high mass yields of the cut crop, the swath or swathes of cut crop produced may be so high that overrunning of the swath or swathes with the mower units in the headland position is no longer possible without causing damage to the swath or swathes of cut crop.

It is an advantage of the present invention that it avoids damage to the swath or swathes of cut crop with the mower units in the headland position in such cases.

Other advantages of the present invention will become apparent as discussed below.

### SUMMARY OF THE INVENTION

According to a first aspect of the present invention, an agricultural apparatus comprises an agricultural vehicle together with a front work unit and two lateral work units located behind and to the sides of the front work unit, the front work unit having a connection to a front of the agricultural vehicle and the lateral work units sharing a connection to a rear of the agricultural vehicle, each of the work units depositing a cut crop as a swath, one or more sensors for determining a height of one or more of the deposited swaths, a control unit for controlling a height of the connections above a ground surface, characterised in that if the height of one or more of the deposited swaths is determined to exceed a predetermined value, the control unit causes the height of the rear connection to be raised.

Preferably the agricultural apparatus includes a further sensor to detect the presence of crop ahead of the front work unit and in the event of no crop being detected as present the control unit causes one or more of the work units to move from the working position to the headland position.

According to a second aspect of the invention, a method of operation of a mower combination according to the first aspect of the invention comprises the steps of providing a predetermined set of values to the control unit, monitoring the height of the one or more deposited swaths by providing signals representative of the height of the one or more deposited swaths, the control unit comparing the signals representing the height of the one or more deposited swaths against a predetermined set of values and as required signalling at least the rear connection to be displaced based on this comparison.

Preferably the method comprises the additional step of monitoring for the presence of standing crop ahead of the agricultural vehicle, and in the event of no crop being detected as present the control unit causing one or more of the work units to move from the working position to the headland position.

According to a third aspect of the invention, a computer implemented method comprises the steps of a control unit receiving a plurality of signals, the signals representing the height of at least a first swath deposited by the work units the control unit being configured to receive the plurality of signals and compare the signals for the height of at least the first swath deposited by the work units against a predetermined set of values and as required generate a signal to cause the position of the rear connection to be adjusted based on the comparison.

Preferably the method comprises the additional step of monitoring for the presence of standing crop ahead of the agricultural vehicle, and in the event of no crop being detected as present the control unit causing one or more of the work units to move from the working position to the headland position.

According to a fourth aspect of the invention, a computer readable program comprises instructions that causes one or more processors to implement the method of the third aspect of the invention.

### BRIEF DESCRIPTION OF THE DRAWINGS

The invention will now be described, by way of example only, with reference to the accompanying drawings, in which:
Figure 1 shows a plan view of an agricultural apparatus for use in the present invention;
Figure 2 shows a schematic view of elements of an agricultural apparatus for use in the present invention;
Figure 3 shows a schematic side view of a portion of an agricultural apparatus provided with lateral work units illustrating a problem with known configurations;
Figure 4 shows a schematic side view of a portion of an agricultural apparatus provided with lateral work units in accordance with the present invention;
Figure 5 shows a flow diagram in relation to a first operation of the agricultural apparatus in accordance with the present invention; and
Figure 6 shows a flow diagram in relation to a further operation of the agricultural apparatus in accordance with the present invention.

### DETAILED DESCRIPTION OF SPECIFIC EMBODIMENTS OF THE INVENTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description.

Reference to terms such as longitudinal, transverse and vertical are made with respect to a longitudinal vehicle axis which is parallel to a normal forward direction of travel.

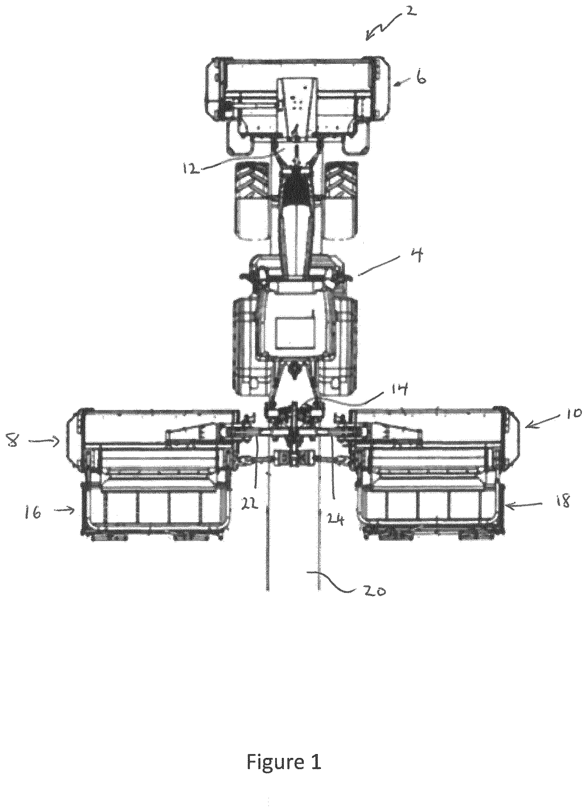

With reference to Figure 1, a plan view of an agricultural apparatus 2 for use in the present invention is shown.

An agricultural apparatus 2 comprises an agricultural vehicle 4 such as a tractor and a number of work units 6,8,10 suitable for cutting standing crop, the work units 6,8,10 being connected to the agricultural vehicle. The work units include a front work unit 6 located to the front of the agricultural vehicle 4 and two lateral work units 8,10 located behind and to the sides of the front work unit 6, each of the work units 6,8,10 depositing cut crop as a swath. The front work unit 6 is conveniently mounted on a front hitch 12 of the agricultural vehicle 4. In a preferred embodiment the work units comprise mowing units.

The lateral mowing units 8,10 are supported from a central chassis by lifting units, for example hydraulic units 22,24. Each hydraulic unit 22,24 may be used to move a respective lateral mowing unit 8,10 between a working position and a transport position. A headland position may be defined between the working position and the transport position. In the working position the height of each of the lateral mowing units 8,10 above a ground surface 21 may be further controlled by operation of the hydraulic units 22,24 between minimum and maximum displacement values, that is across a ground adaptation range.

In Figure 1, a swath 20 produced by the front work unit 6 is shown. In Figure 1 conveyors 16,18 mounted to the rear of the lateral work units 8,10 will direct cut crop inwardly to produce a broader central swath. These swathes are omitted from Figure 1 for clarity.

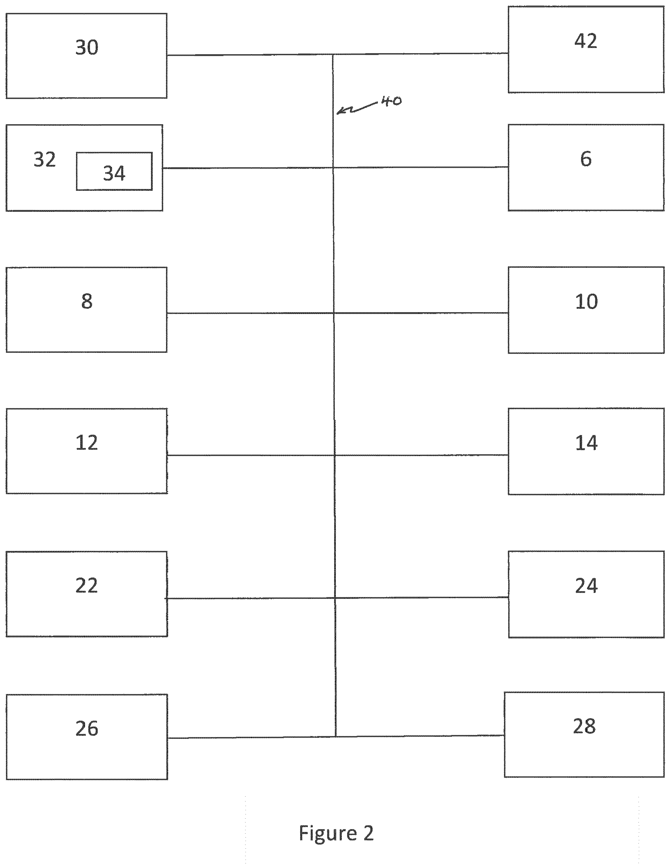

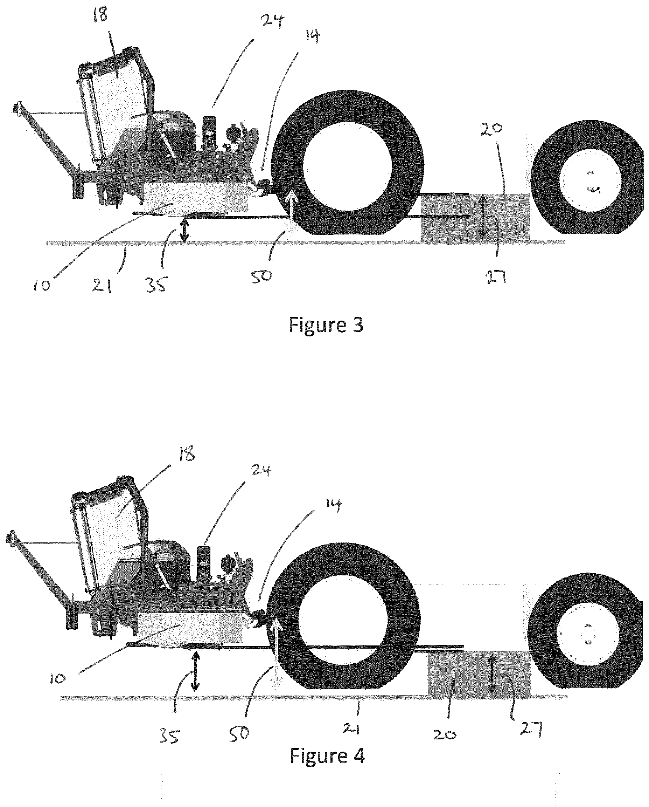

A sensor 26 (Figure 2) is provided to determine a displacement or position 50 of the rear hitch 14, that is the relative position of the rear hitch assembly in relation to a reference position on the agricultural vehicle (Figures 3 to 7).

An operator can control operation of the front and rear work units 6,8,10 from within the agricultural vehicle 4 by use of a suitable user terminal 30. For example the operator can cause each of the work units to move about the central frame a working position to a headland position, can cause each of the lateral work units 8,10 to move between the working position and the transport position. As noted above, the operator can also control the working height of the lateral mowing units 8,10 within the ground adaptation range by use of the hydraulic units 22,24.

The user terminal 30 communicates with an electronic control unit 32. The control unit 32 provides signals to control operation of the front and rear hitches 12,14 of the agricultural vehicle 4 and provides signals to control operation of the mowing units 6,8,10 and the conveyor units 16,18. Conveniently the signals are provided by way of a suitable data communication network 40 such as one compliant with the ISOBUS standard (a network in conformance to ISO 11783).

The control unit 32 may conveniently comprise a single processor located on the agricultural vehicle or its functions may be split between a processor located on the agricultural vehicle and one or more additional processors located on the mowing units 6,8,10, the additional processor(s) being in electronic communication with the first processor.

The control unit 32 is also able to access a suitable memory 34. The memory 34 may take any suitable form and is in electronic communication with the control unit 32.

A sensor 28 is provided for providing a signal representative of a height 27 of the deposited swath 20. The sensor 28 may be located on the front work unit 6 or on the agricultural vehicle 4 as is convenient. The sensor 28 is in electronic communication with the control unit 24. The sensor 28 has particular use for determining the height of the deposited swath 20 where the operator is about to execute a headland operation with the agricultural apparatus 2.

By reference to Figure 3 a known problem with the state of the art is illustrated. At high mass yields of a standing crop, the swath 20 of cut crop produced may be so high that overrunning of the swath 20 in the headland position is no longer possible without causing damage to the swath 20 since the raised height 35 of the lateral work units 8,10 is less than the height 27 of the swath 20.

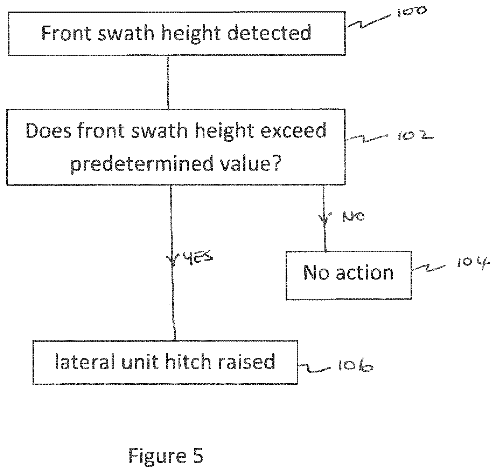

In addressing this this problem reference is made to Figures 4 and 5. The height 27 of the swath is detected (step 100) and a signal sent to the control unit 24. The control unit 24 compares this value to a predetermined value (step 102). The predetermined value is conveniently stored in the memory 34 in any suitable manner such as a database or look up table. The predetermined value corresponds to the normal operating height of the lateral work unit 8,10 when in a headland position. If the value of the height of the swath is less than the predetermined value the control unit 24 takes no further action (step 104). If the value of the height of the swath is equal to or greater than the predetermined value the control unit 24 causes the rear hitch 14 of the agricultural vehicle to be raised (step 106) thereby raising the lateral work units 8,10 such that the lateral work units 8,10 can no longer damage the swath 20 of cut crop.

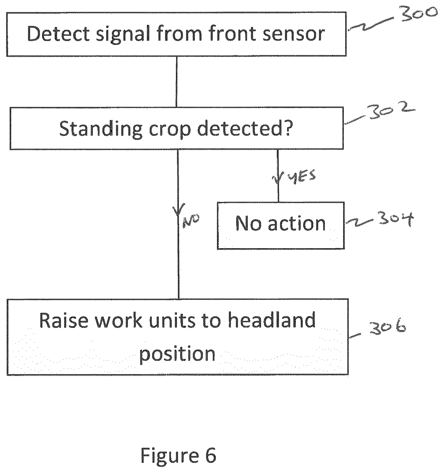

In a further embodiment, a front sensor 42 is provided to detect the presence or absence of standing crop ahead of the agricultural apparatus 2. This front sensor 42 may be mounted on the agricultural vehicle 4 or the front work unit 6. Alternatively an aggregated signal from sensors 42 on both the agricultural vehicle 4 and the front work unit 6 may be used. The control unit 24 detects the signal from the front sensor 42 (step 300 Figure 6) and determines the presence or absence of standing crop head of the front work unit 6 (step 302).

If standing crop is detected, the control unit 24 takes no action and the work units 6,8,10 continue to operate in the working position (step 304). If no standing crop is detected the control unit 24 causes the work units 6,8,10 to move to the headland positions (step 306). In this way the when the edge of the standing crop to be processed is reached, the agricultural implement is operated to reach the headland position as soon as possible.

By monitoring the speed of the agricultural vehicle 4 the front work unit 6 may first be moved to a headland position and the lateral work units 8,10 may be subsequently controlled to continue cutting the standing crop until the edge of the standing crop is reached and then the lateral work units 8,10 also are automatically raised to their headland position.

From reading the present disclosure, other modifications will be apparent to persons skilled in the art. Such modifications may involve other features which are already known in the field of mowers and component parts therefore and which may be used instead of or in addition to features already described herein.

## Claims

1. An agricultural apparatus comprising an agricultural vehicle together with a front work unit and two lateral work units located behind and to the sides of the front work unit, the front work unit having a connection to a front of the agricultural vehicle and the lateral work units sharing a connection to a rear of the agricultural vehicle, each of the work units depositing a cut crop as a swath, one or more sensors for determining a height of one or more of the deposited swaths, a control unit for controlling a height of the connections above a ground surface, **characterised in that** if the height of one or more of the deposited swaths is determined to exceed a predetermined value, the control unit causes the height of the rear connection to be raised.

2. An agricultural apparatus according to claim 1, **characterised in that** the agricultural apparatus includes a further sensor to detect the presence of crop ahead of the front work unit and in the event of no crop being detected as present the control unit causes one or more of the work units to move from the working position to the headland position.

3. A method of operation of a mower combination according to claim 1, is **characterised in that** it comprises the steps of providing a predetermined set of values to the control unit, monitoring the height of the one or more deposited swaths by providing signals representative of the height of the one or more deposited swaths, the control unit comparing the signals representing the height of the one or more deposited swaths against a predetermined set of values and as required signalling at least the rear connection to be displaced based on this comparison.

4. A method according to claim 3, **characterised in that** the method comprises the additional step of monitoring for the presence of standing crop ahead of the agricultural vehicle, and in the event of no crop being detected as present the control unit causing one or more of the work units to move from the working position to the headland position.

5. A computer implemented method comprises the steps of a control unit receiving a plurality of signals, the signals representing the height of at least a first swath deposited by the work units the control unit being configured to receive the plurality of signals and compare the signals for the height of at least the first swath deposited by the work units against a predetermined set of values and as required generate a signal to cause the position of the rear connection to be adjusted based on the comparison.

6. A computer implemented method according to claim 5, **characterised in that** the method comprises the additional step of monitoring for the presence of standing crop ahead of the agricultural vehicle, and in the event of no crop being detected as present the control unit causing one or more of the work units to move from the working position to the headland position.

7. A computer readable program comprising instructions that causes one or more processors to implement the method of claim 5 or claim 6.
